# EUROPEAN PATENT SPECIFICATION

(11) **EP 2 158 654 B1**
(45) Date of publication and mention of the grant of the patent: **10.08.2011**
(21) Application number: 07765359.0
(22) Date of filing: 11.06.2007
(51) Int. Cl.: H02G 1/10, H02G 9/06, F16L 1/19

(54) **A TUBING ARRANGEMENT FOR AN OFFSHORE FACILITY**
ROHRANORDNUNG FÜR EINE OFFSHORE-ANLAGE
TUBAGE DE PLATE-FORME AU LARGE

(43) Date of publication of application: 03.03.2010
(73) Proprietor: Vestas Wind Systems A/S, 8940 Randers - SV (DK)
(72) Inventor: SØE-JENSEN, Anders, DK-3520 Farum (DK)
(74) Representative: Inspicos A/S
(86) International application number: PCT/EP2007/055716
(87) International publication number: WO 2008/151660

(56) References cited:
- EP-A- 0 565 445
- EP-A- 1 172 518
- WO-A-01/48410
- WO-A-95/07405
- US-A- 3 934 647

## Description

### FIELD OF THE I NVENTI ON

The present invention relates to a tubing arrangement for an offshore facility, such as an offshore wind turbine or an oil rig. The tubing arrangement of the present invention is preferably suitable for holding one or more cables. More particularly, the present invention relates to a tubing arrangement which is capable of providing improved protection for cables, tubes, etc. arranged in the tubing arrangement. Furthermore, the present invention relates to an offshore facility comprising such a tubing arrangement, and to a method of mounting a cable on an offshore facility.

### BACKGROUND OF THE INVENTION

Offshore facilities, such as offshore wind turbines and oil rigs, normally require that cables, e.g. electrical cables, and/or tubes are mounted thereon. Cables may be used for supplying power to and/or from the facility or for communicating electrical signals to and/or from the facility, and tubes may, e.g., be used for conveying oil away from the facility. In particular cables may be mounted on offshore facilities by means of so-called J-tubes. J-tubes are tubes having the shape of a J, i.e. having a curved part arranged near an end of the tube. The J-tube may be mounted on the offshore facility in such a manner that it substantially follows a tower construction of the offshore facility, and in such a manner that the curved part is arranged at or near the seabed. Thereby the cables arranged in the J-tube will emerge from the J-tube in a direction which substantially follows the seabed, and it is therefore easy to flush the cables into the seabed in order to protect them from wear and from damage caused by passing vessels, such as trawlers etc.

However, it is difficult to ensure that the curved part of the J-tube is positioned at or near the seabed, because it is very difficult to predict the precise distance between the water surface and the seabed. This is, inter alia, because structures mounted in the seabed may cause the creation of scour holes around the structure. Whether or not such scour holes are created, and the size of possible scour holes is unpredictable, and the size may even vary over time. Thus, even if the exact distance between the water surface and the seabed has previously been measured, the distance may have been altered between the time of the measurement and the time of mounting the J-tube and/or mounting a cable in the J-tube. Thus, even if care is taken, there is a risk that a cable emerging from the curved part of a J-tube is hanging freely from the J-tube. This may cause damage to the cable, inter alia because the cable is allowed to move relatively to the end of the J-tube, and because a substantial piece of cable can not be flushed into the seabed due to the consequential distance between the end of the J-tube and the seabed. This is very disadvantageous.

Furthermore, mounting a cable in a J-tube as described above normally requires the use of divers. This is difficult, dangerous, cumbersome and expensive.

Attempts to solve at least some of the problems outlined above have previously been made. Thus, EP 1 616 377 discloses a protective device for cables and conduits. The protective device may be mounted at the end of a J-tube, and it comprises a plurality of pipe elements, each formed by joining together two pipe halves. The pipe segments are joined to one another to form a pipe for accommodating a cable or a conduit in such a manner that they are capable of pivoting relatively to each other. This allows the cable or conduit accommodated in the pipe to bend, the maximum bending radius being defined and limited by the allowed pivoting movement between two neighbouring pipe segments. Furthermore, the J-tube disclosed in EP 1 616 377 may comprise a telescopic function allowing the length of the J-tube to be adjusted in order to ensure that the curved part of the J-tube is arranged at the seabed.

The telescopic arrangement disclosed in EP 1 616 377 is relatively mechanically complex, and it is therefore relatively expensive to manufacture. Furthermore, there is a risk that the telescopic function jams, e.g. due to corrosions or due to sediments or sand entering part of the tube.

### SUMMARY OF THE INVENTION

It is, thus, an object of the invention to provide a tubing arrangement for an offshore facility, the tubing arrangement being simple to manufacture and operate.

It is a further object of the invention to provide a tubing arrangement for an offshore facility, the tubing arrangement being capable of operating reliably.

It is an even further object of the invention to provide a tubing arrangement for an offshore facility, the tubing arrangement providing improved protection as compared to prior art tubing arrangements for cables arranged in the tubing arrangement.

It is an even further object of the invention to provide an offshore facility, such as an offshore wind turbine, providing improved protection as compared to prior art offshore facilities for cables mounted on the offshore facility.

It is an even further object of the invention to provide a method of mounting a cable on an offshore facility in such a manner that sediments and sand are not introduced in a tubing arrangement surrounding the cable during the mounting procedure.

It is an even further object of the invention to provide a method of mounting a cable on an offshore facility in such a manner that the required use of divers is reduced as compared to prior art methods.

According to a first aspect of the invention the above and other objects are fulfilled by providing a tubing arrangement according to claim 1.

The offshore facility is preferably an offshore wind turbine, but it could alternatively be an oil rig or another suitable kind of offshore facility. This will be described further below.

In the present context the term 'tubing arrangement' should be interpreted to mean an arrangement comprising one or more tubes or tube sections. The tube arrangement is preferably adapted to hold cables, wiring and/or tubes, etc. which should be connected to the offshore facility.

The tubing arrangement according to the invention comprises two tube sections interconnected by means of a joint part. Thus, the two tube sections are allowed to pivot relatively to each other. The first tube section comprises a curved part, and, is or forms part of a J-tube as described above. The second tube section is substantially rigid, i.e. it is capable of maintaining its shape, and it is thereby capable of protecting cables or other items arranged inside the tubing arrangement.

When the tubing arrangement is installed on the offshore facility, the first tube section is preferably mounted on the offshore facility in such a manner that the first tube section extends along a longitudinal direction defined by the offshore facility, and in such a manner that the curved part is arranged at a position at or near the seabed. In the case that the tubing arrangement holds a cable, the cable will run from a part of the offshore facility which is above the water surface, through the first tube section and the second tube section, via the joint part. In the case that the first tube section is ideally positioned, i.e. the curved part is arranged immediately adjacent to the seabed, then substantially the entire length of the second tube section may be arranged along the seabed, provided that the second tube section is substantially straight, and the cable emerging from the second tube section at the end arranged opposite to the joint part can readily be flushed into the seabed in order to provide protection. On the other hand, in the case that the curved part of the first tube section is arranged at a distance from the seabed, e.g. due to the occurrence of a scour hole, then the second tube section is allowed to pivot relatively to the first tube section, by means of the joint part. Accordingly, gravity will pull the second tube section downwards until part of it abuts the seabed, possibly a part of the seabed being inside the scour hole. Thereby the part of the cable which would otherwise hang freely between the end of the first tube section and the seabed will be protected by the rigid second tube section. Thus, the cable is protected without the requirement for complex mechanical arrangements.

Furthermore, when using a tubing arrangement according to the first aspect of the invention, it is no longer required that the curved part of the first tube section is arranged immediately adjacent to the seabed. Accordingly, there is no need to know the exact distance to the seabed, and it is not necessary to adjust the position of the curved part of the first tube section. This allows the first tube section to be pre-mounted on the offshore facility, i.e. it may be mounted on the offshore facility before the offshore facility is installed at the offshore site where it is supposed to operate. This reduces the work required to be performed offshore, and since this is far more difficult and expensive than performing corresponding work on shore, the costs involved with installation of the offshore facility can thereby be considerably reduced. Furthermore, it is not necessary to provide complex mechanical arrangements, such as telescopic arrangements, in order to ensure correct positioning of the curved part of the first tube section. This reduces the manufacturing costs, and the risk that the tubing arrangement malfunctions due to jamming of such a positioning arrangement is avoided. Finally, the required use of divers is reduced, thereby considerably reducing installation costs.

The tubing arrangement further comprises a flexible tube connected to the second tube section at an end arranged opposite to the end which is connected to the joint part. Thereby even further protection is provided for a cable or the like emerging from the second tube section. However, the flexible tube makes it possible for this part of the cable or the like to bend, and this is an advantage when a cable or the like is to be introduced into the tubing arrangement. The flexible tube may advantageously be flushed into the seabed along with the cable or the like.

The joint part may comprise a two-dimensional hinge, i.e. a hinge which is only capable of pivoting about a single pivot axis. According to this embodiment, the relative pivoting movements between the first tube section and the second tube section is limited to movements about said pivoting axis. The pivoting axis is preferably arranged substantially horizontally in order to allow a movement of the second tube section caused by gravity as described above.

As an alternative, the joint part may comprise a spherical joint. In this case the first tube section and the second tube section are allowed to move relatively to each other in a more freely manner, e.g. vertically as well as horizontally. This has the advantage that during mounting of a cable in the tubing arrangement while using a sea vessel, the exact position of the sea vessel relatively to the direction of the curved part of the first tube section is not critical. Accordingly, the sea vessel can be positioned while taking other aspects into consideration, e.g. wind direction, wind speed, current direction, etc.

As another alternative, the joint part may comprise flexible tubing. According to this embodiment, the first tube section and the second tube sections are also allowed to move relatively freely relatively to each other.

Alternatively, the joint part may be or comprise any other suitably joint or hinge, as long as the first tube part and the second tube part are allowed to pivot relatively to each other.

The tubing arrangement may further comprise at least one cable arranged in interior parts of the tube sections. At least one of the cable(s) may be a power cable, e.g. for supplying power to the offshore facility or for delivering power generated in an offshore wind turbine to a power grid on shore.

Alternatively or additionally, the tubing arrangement may comprise one or more wires and/or one or more tubes, e.g. for conveying oil from an oil rig to a plant on shore, or for conveying fluids, such as hydraulic fluids, to the offshore facility.

The second tube section may be essentially non-curved in a plane defined by the curvature of the first tube section. According to this embodiment, the second tube section defines a substantially straight line in the plane defined by the curvature of the first tube section. However, the second tube section may be curved in other planes, such as a plane being substantially perpendicular to the plane defined by the curvature of the first tube section.

According to a second aspect of the invention the above and other objects are fulfilled by providing an offshore facility comprising a tower construction mounted at the seabed and a tubing arrangement according to the first aspect of the invention, at least part of said tubing arrangement being mounted on the tower construction.

The offshore facility may advantageously be a wind turbine. Alternatively, the offshore facility - may be any other suitable kind of offshore facility, such as an oil rig.

According to a third aspect of the invention the above and other objects are fulfilled by providing a method of mounting a cable on an offshore facility, the method comprising the steps of:
- providing a tubing arrangement according to claim 1
- inserting the cable in the tubing arrangement via the flexible tube,
wherein the step of inserting the cable is performed above a level defined by the seabed.

It should be noted that a skilled person would readily recognise that any feature described in combination with the first aspect of the invention could also be combined with the second and third aspects of the invention, any feature described in combination with the second aspect of the invention could also be combined with the first and third aspects of the invention, and any feature described in combination with the third aspect of the invention could also be combined with the first and second aspects of the invention.

According to the third aspect of the invention, a cable is mounted on an offshore facility using a tubing arrangement essentially according to the first aspect of the invention. At least part of the tubing arrangement, preferably at least part of the first tube section, is mounted on the offshore facility, e.g. as described previously.

The cable is inserted in the tubing arrangement via the flexible tube, and the flexibility of the flexible tube allows an entrance opening of that tube to be manipulated to a desired position. Accordingly, the entrance opening may be arranged at a level which is above a level defined by the seabed, and accordingly the step of inserting the cable is performed above the level, defined by the seabed. If a cable is inserted in a tubing arrangement at a level which is at or near the seabed, there is a risk that sand and/or sediment is introduced in the tubing arrangement along with the cable. This is very undesirable since it inhibits sliding movements of the cable in the tubing arrangement, and since it may cause damage to the cable and/or to the tubing arrangement. It is therefore an advantage that the step of inserting the cable is performed above a level defined by the seabed.

Preferably, the step of inserting the cable is performed above a level defined by the water surface. Thereby it is further avoided that sediment or impurities contained in the water substantially above the seabed is introduced in the tubing arrangement along with the cable. It is also avoided that salt water is introduced in the tubing arrangement during insertion of the cable. Finally, the cable can be inserted in the tubing arrangement completely without the use of divers.

The method may further comprise the step of positioning the flexible tube on or in the vicinity of a floating facility, and the step of inserting the cable may be performed from the floating facility. The cable, as well as the personnel installing the cable, is preferably positioned on the floating facility. The floating facility may be a sea vessel, such as a boat or a barge adapted to carry the cable from a position on shore to the site of the offshore facility.

The step of inserting the cable may comprise the steps of:
- introducing a messenger wire into the tubing arrangement, and
- pulling the cable into the tubing arrangement by means of the messenger wire.

The method may further comprise the step of flushing the flexible tube into the seabed. According to this embodiment, the flexible tube is preferably lowered to a position along the seabed when the step of inserting the cable has been completed. When the flexible tube has been lowered to this position, it is flushed into the seabed along with the cable.

Alternatively or additionally, the method may further comprise the steps of:
- mounting the first tube section on the offshore facility, and
- pivoting the joint part until at least a part of the second tube section touches the seabed.

Thereby the cable is protected, even if a scour hole has formed at the foundation of the offshore facility. This has already been described above.

### BRIEF DESCRIPTION OF THE DRAWINGS

The invention will now be described in further detail with reference to the accompanying drawings in which
Fig. 1 is a schematic drawing of a tubing arrangement according to an embodiment of the invention prior to insertion of a cable,
Fig. 2 is a schematic drawing of the tubing arrangement of Fig. 1 during insertion of a cable,
Fig. 3 is a schematic drawing of the tubing arrangement of Figs. 1 and 2 after insertion of a cable, and
Fig. 4 illustrates use of a tubing arrangement according to an embodiment of the invention at an offshore facility having a scour hole.

### DETAI LED DESCRI PTI ON OF THE DRAWINGS

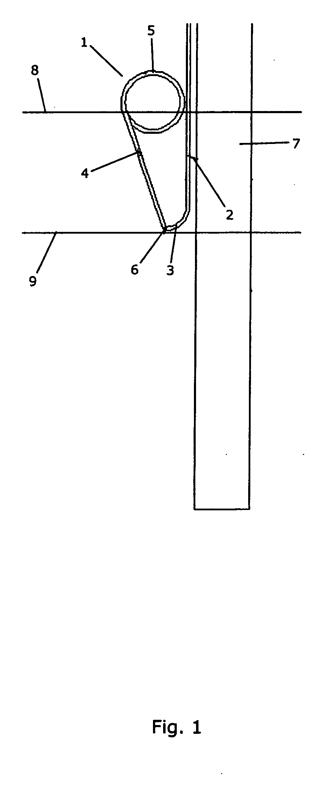

Fig. 1 is a schematic drawing of a tubing arrangement 1 according to an embodiment of the invention. The tubing arrangement 1 comprises a first tube section 2 in the form of a J-tube, i.e. with a curved part 3, a second tube section 4 being substantially rigid, and a flexible tube 5. The first tube section 2 and the second tube section 4 are connected via a joint part 6, and the first tube section 2 and the second tube section 4 are thereby allowed to pivot relatively to each other. This will be explained further below.

The first tube section 2 is mounted on a tower construction 7 for an offshore facility, such as an offshore wind turbine. The first tube section 2 is mounted in such a manner that it extends above the level of a water surface 8, and in such a manner that the curved part 3 is arranged near the seabed 9.

In Fig. 1 the flexible tube 5 is coiled up. Thereby it is indicated that a cable has not yet been inserted into the tubing arrangement 1.

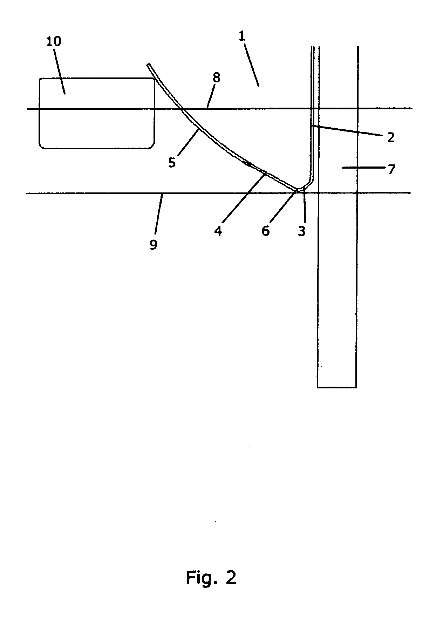

Fig. 2 shows the tubing arrangement 1 of Fig. 1. However, in Fig. 2 the flexible tube 5 has been uncoiled, and the end of the flexible tube 5 is positioned on a floating vessel 10, e.g. a boat or a barge. It can also be seen that the joint part 6 has been pivoted relatively to the situation shown in Fig. 1, and the second tube section 4 has thereby been lowered slightly towards the seabed 9.

A cable (not shown) can be inserted in the tubing arrangement 1 from the vessel 10 via the flexible tube 5. As described above, this may advantageously be done by introducing a messenger wire into the tubing arrangement 1 and subsequently pulling the cable into the tubing arrangement 1 via the messenger wire.

It is an advantage that the end of the flexible tube 5 is positioned on the vessel 10, because it is relatively easy to insert the cable from the vessel 10 in the manner described above, rather than having to introduce the cable into the tubing arrangement 1 from a position at the seabed by means of divers and/or remotely operable vehicles (ROVs). This also considerably reduces the installation costs. Furthermore, the fact that the introduction of the cable takes place above the water surface 8 prevents sand, sediment, salt water, etc. from entering the tubing arrangement 1 along with the cable. This has already been described above.

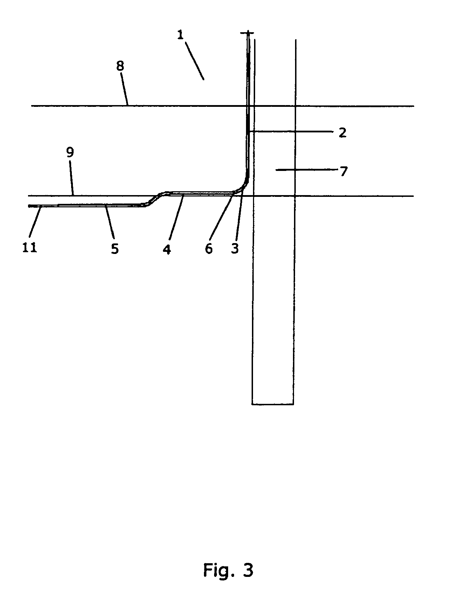

Fig. 3 shows the tubing arrangement 1 of Figs. 1 and 2. In Fig. 3 the cable 11 has been introduced into the tubing arrangement 1, and the vessel has been removed from the site. The joint part 6 has been pivoted further, and the second tube section 4 is now lying along the seabed 9. The flexible tube 5 as well as the cable 11 has been flushed into the seabed 9 in order to protect the cable 11 as previously described.

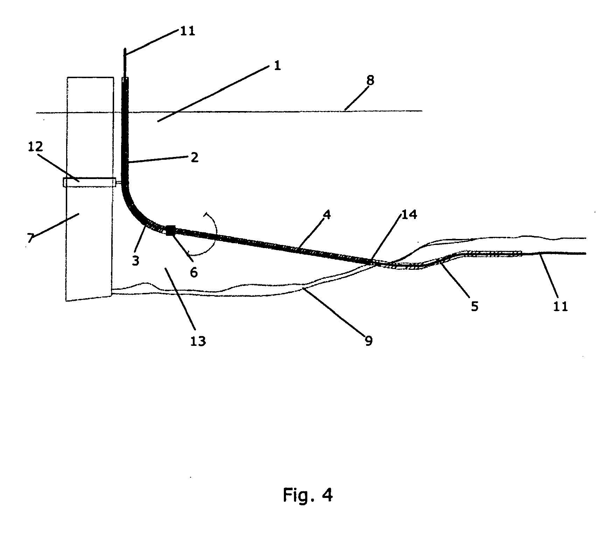

Fig. 4 shows a tubing arrangement 1 similar to the one shown in Figs. 1-3, and similar parts have therefore been provided with identical reference numerals. Accordingly, a detailed description of the various parts will not be presented here. The tubing arrangement 1 of Fig. 4 is shown in a situation where the flexible tube 5 has been flushed into the seabed 9, i.e. a situation corresponding to the one illustrated in Fig. 3.

In Fig. 4 the first tube section 2 is attached to the tower construction 7 of the offshore facility by means of a carrier structure 12. The cable 11 and the tubing arrangement 1 have been installed in a manner substantially as described above with reference to Figs. 1-3. However, in Fig. 4 a scour hole 13 has formed in a region near the tower construction 7. Accordingly, there is a gap between the curved part 3 of the first tube section 2 and the seabed 9. Thus, when the joint part 6 is pivoted to lower the second tube section 4 as described above with reference to Figs. 2 and 3, the pivoting movement is continued until the end 14 of the second tube section 4 which is connected to the flexible tube 5 abuts the seabed 9. It is clear from Fig. 4 that the scour hole 13 has the effect that the end 14 is the only part of the second tube section 4 which abuts the seabed 9. However, the second tube section 4 protects the part of the cable 11 arranged inside the second tube section 4, which would otherwise be hanging freely and exposed. Furthermore, it is ensured that the cable 11, along with the flexible tube 5, is flushed into the seabed 9 from the point where the cable 11 emerges from the second tube section 4. The joint part 6 ensures that the end 14 abuts the seabed 9, even if the scour, hole 13 is very deep or extends to a position far from the tower construction 7. This is very advantageous, since a high degree of protection for the cable 11 is provided without the requirement of complicated mechanical constructions.

## Claims

1. A tubing arrangement (1) for holding one or more cables mounted on an offshore facility, the tubing arrangement (1) comprising:
- a first tube section (2) comprising a curved part (3), said first tube section (2) being or forming part of a J-tube,
- a second tube section (4), said second tube section (4) being substantially rigid,
- a joint part (6) interconnecting the second tube section (4) and the curved part (3) of the first tube section (2), thereby allowing said tube sections (2, 4) to pivot relatively to each other, and
- a flexible tube (5) connected to the second tube section (4) at an end arranged opposite to the end which is connected to the joint part (6).

2. A tubing arrangement (1) according to claim 1, wherein the joint part (6) comprises a two-dimensional hinge.

3. A tubing arrangement (1) according to claim 1, wherein the joint part (6) comprises a spherical joint.

4. A tubing arrangement (1) according to claim 1, wherein the joint part (6) comprises flexible tubing.

5. A tubing arrangement (1) according to any of the preceding claims, further comprising at least one cable (11) arranged in interior parts of the tube sections (2, 4).

6. A tubing arrangement (1) according to any of the preceding claims, wherein the second tube section (4) is essentially non-curved in a plane defined by the curvature of the first tube section (2).

7. An offshore facility comprising a tower construction (7) mounted at the seabed (9) and a tubing arrangement (1) according to any of the preceding claims, at least part of said tubing arrangement (1) being mounted on the tower construction (7).

8. An offshore facility according to claim 7, wherein the offshore facility is a wind turbine.

9. A method of mounting a cable (11) on an offshore facility, the method comprising the steps of:
- providing a tubing arrangement (1) according to claim 1 , and
- inserting the cable (11) in the tubing arrangement (1) via the flexible tube (5),
wherein the step of inserting the cable (11) is performed above a level defined by the seabed (9).

10. A method according to claim 9, wherein the step of inserting the cable (11) is performed above a level defined by the water surface (8).

11. A method according to claim 9 or 10, further comprising the step of positioning the flexible tube (5) on or in the vicinity of a floating facility, and wherein the step of inserting the cable (11) is performed from the floating facility.

12. A method according to any of claims 9-11, wherein the step of inserting the cable (11) comprises the steps of:
- introducing a messenger wire into the tubing arrangement (1), and
- pulling the cable (11) into the tubing arrangement (1) by means of the messenger wire.

13. A method according to any of claims 9-12, further comprising the step of flushing the flexible tube (5) into the seabed (9).

14. A method according to any of claims 9-13, further comprising the steps of:
- mounting the first tube section (2) on the offshore facility, and
- pivoting the joint part (6) until at least a part of the second tube section (4) touches the seabed (9).

## Patentansprüche

1. Rohrvorrichtung (1) zur Aufnahme eines oder mehrerer an einer Offshore-Einrichtung montierten Kabel, wobei die Rohrvorrichtung (1) umfasst:
- einen ersten Rohrabschnitt (2) mit einem gekrümmten Teil (3), wobei der erste Rohrabschnitt (2) ein J-Rohr bildet oder ein Teil davon ist,
- einen zweiten Rohrabschnitt (4), wobei der zweite Rohrabschnitt (4) im Wesentlichen steif ist,
- ein Verbindungsteil (6), das den zweiten Rohrabschnitt (4) und den gekrümmten Teil (3) des ersten Rohrabschnitts (2) verbindet, wodurch die beiden Rohrabschnitte (2, 4) gegeneinander drehbar sind, und
- einen Schlauch (5), der mit dem Ende des zweiten Rohrabschnitts (4) gegenüber dem Ende verbunden ist, das mit dem Verbindungsteil (6) verbunden ist.

2. Rohrvorrichtung (1) nach Anspruch 1 , wobei das Verbindungsteil (6) ein zweidimensionales Scharnier umfasst.

3. Rohrvorrichtung (1) nach Anspruch 1 , wobei das Verbindungsteil (6) ein Kugelgelenk umfasst.

4. Rohrvorrichtung (1) nach Anspruch 1, wobei das Verbindungsteil (6) Schlauch umfasst.

5. Rohrvorrichtung (1) nach einem der vorhergehenden Ansprüche, weiterhin umfassend mindestens ein Kabel (11), das im Inneren der Rohrabschnitte (2, 4) angeordnet ist.

6. Rohrvorrichtung (1) nach einem der vorhergehenden Ansprüche, wobei der zweite Rohrabschnitt (4) in einer durch die Krümmung des ersten Rohrabschnitts (2) festgelegten Ebene im Wesentlichen nicht gekrümmt ist.

7. Offshore-Einrichtung, umfassend ein Turmbauwerk (7), das auf dem Meeresboden (9) aufgestellt ist, und eine Rohrvorrichtung (1) nach einem der vorhergehenden Ansprüche, wobei mindestens ein Teil der Rohrvorrichtung (1) am Turmbauwerk (7) montiert ist.

8. Offshore-Einrichtung nach Anspruch 7, wobei die Offshore-Einrichtung einer Windkraftanlage ist.

9. Verfahren zum Anbringen eines Kabels (11) an einer Offshore-Einrichtung, wobei das Verfahren folgende Schritte umfasst:
- Bereitstellen einer Rohrvorrichtung (1) nach Anspruch 1 und
- Einführen des Kabels (11) in die Rohrvorrichtung (1) mithilfe des Schlauchs (5),
wobei der Schritt des Einführens des Kabels (11) oberhalb einer durch den Meeresboden (9) festgelegten Höhe stattfindet.

10. Verfahren nach Anspruch 9, wobei der Schritt des Einführens des Kabels (11) oberhalb einer durch die Wasseroberfläche (8) festgelegten Höhe stattfindet.

11. Verfahren nach Anspruch 9 oder 10, weiterhin umfassend den Schritt des Positionierens des Schlauchs (5) auf oder in der Nähe einer Schwimmvorrichtung und wobei der Schritt des Einführens des Kabels (11) von der Schwimmvorrichtung aus durchgeführt wird.

12. Verfahren nach einem der Ansprüche 9-11, wobei der Schritt des Einführens des Kabels (11) folgende Schritte umfasst:
- Einführen eines Tragkabels in die Rohrvorrichtung (1) und
- Ziehen des Kabels (11) in die Rohrvorrichtung (1) mithilfe des Tragkabels.

13. Verfahren nach einem der Ansprüche 9-12, weiterhin umfassend den Schritt des Spülens des Schlauchs (5) in den Meeresboden (9).

14. Verfahren nach einem der Ansprüche 9-13, weiterhin umfassend die folgenden Schritte:
- Montieren des ersten Rohrabschnitts (2) an der Offshore-Einrichtung und
- Drehen des Verbindungsteils (6), bis mindestens einen Teil des zweiten Rohrabschnitt (4) den Meeresboden (9) berührt.

## Revendications

1. Système tubulaire (1) destiné à maintenir un ou plusieurs câbles montés sur une installation offshore, le système tubulaire (1) comprenant :
- un premier tronçon de tube (2) comprenant une partie courbe (3), ledit premier tronçon de tube (2) étant ou faisant partie d'un tube en J,
- un deuxième tronçon de tube (4), ledit deuxième tronçon de tube (4) étant essentiellement rigide,
- une pièce de jonction (6) reliant le deuxième tronçon de tube (4) et la partie courbe (3) du premier tronçon de tube (2), permettant ainsi auxdits tronçons de tube (2, 4) de pivoter l'un par rapport à l'autre, et
- un tube souple (5) raccordé au deuxième tronçon de tube (4) au niveau d'une extrémité située à l'opposé de l'extrémité raccordée à la pièce de jonction (6).

2. Système tubulaire (1) selon la revendication 1, dans lequel la pièce de jonction (6) comprend une charnière à deux dimensions.

3. Système tubulaire (1) selon la revendication 1, dans lequel la pièce de jonction (6) comprend un joint sphérique.

4. Système tubulaire (1) selon la revendication 1, dans lequel la pièce de jonction (6) comprend une tubulure souple.

5. Système tubulaire (1) selon l'une quelconque des revendications précédentes, comprenant également au moins un câble (11) disposé dans des parties internes des tronçons de tube (2, 4).

6. Système tubulaire (1) selon l'une quelconque des revendications précédentes, dans lequel le deuxième tronçon de tube (4) est essentiellement non courbe dans un plan défini par la courbure du premier tronçon de tube (2).

7. Installation offshore comprenant une construction de type tour (7) installée au fond de la mer (9) et un système tubulaire (1) selon l'une quelconque des revendications précédentes, au moins une partie dudit système tubulaire (1) étant montée sur la construction de type tour (7).

8. Installation offshore selon la revendication 7, dans laquelle l'installation offshore est une turbine éolienne.

9. Méthode de montage d'un câble (11) sur une installation offshore, la méthode comprenant les étapes suivantes :
- apport d'un système tubulaire (1) selon la revendication 1, et
- insertion du câble (11) dans le système tubulaire (1) au moyen du tube souple (5),
dans laquelle l'étape d'insertion du câble (11) est réalisée au-dessus d'un niveau défini par le fond de la mer (9).

10. Méthode selon la revendication 9, dans laquelle l'étape d'insertion du câble (11) est réalisée au-dessus d'un niveau défini par la surface de l'eau (8).

11. Méthode selon la revendication 9 ou 10, comprenant également l'étape de positionnement du tube souple (5) sur ou à proximité d'une installation flottante, et dans laquelle l'étape d'insertion du câble (11) est réalisée depuis l'installation flottante.

12. Méthode selon l'une quelconque des revendications 9 à 11, dans laquelle l'étape d'insertion du câble (11) comprend les étapes suivantes :
- introduction d'un fil porteur dans le système tubulaire (1), et
- traction du câble (11) dans le système tubulaire (1) au moyen du fil porteur.

13. Méthode selon l'une quelconque des revendications 9 à 12, comprenant également l'étape d'encastrement du tube souple (5) dans le fond de la mer (9).

14. Méthode selon l'une quelconque des revendications 9 à 13, comprenant les étapes suivantes :
- montage du premier tronçon de tube (2) sur l'installation offshore, et
- pivotement de la pièce de jonction (6) jusqu'à ce qu'au moins une partie du deuxième tronçon de tube (4) touche le fond de la mer (9).
